# EUROPEAN PATENT APPLICATION

(11) **EP 4 443 768 A1**
(43) Date of publication of application: **09.10.2024**
(21) Application number: 22913670.0
(22) Date of filing: 17.10.2022
(51) Int. Cl.: H04B 10/25

(54) **OPTICAL SIGNAL TRANSMISSION APPARATUS AND OPTICAL TRANSMISSION SYSTEM**

(30) Priority: 31.12.2021 CN 202111664917
(71) Applicant: Huawei Technologies Co., Ltd., Shenzhen, Guangdong 518129 (CN)
(72) Inventor: HUANG, Xinhua, Shenzhen, Guangdong 518129 (CN); JIANG, Qun, Shenzhen, Guangdong 518129 (CN); FENG, Jia, Shenzhen, Guangdong 518129 (CN); LI, Huiping, Shenzhen, Guangdong 518129 (CN)
(74) Representative: Körber, Martin Hans
(86) International application number: PCT/CN2022/125680
(87) International publication number: WO 2023/124406

(57) **Abstract**

Embodiments of this application provide an optical signal transmission apparatus and an optical transmission system. The optical signal transmission apparatus includes: a first fiber collimator, configured to input a first combined optical signal; a first beam splitter, configured to split the first combined optical signal to obtain an optical signal of a first wavelength and an optical signal of a second wavelength, further configured to transmit the optical signal of the first wavelength to a first filter unit, and further configured to transmit the optical signal of the second wavelength to a third fiber collimator; the first filter unit, configured to transmit the optical signal of the first wavelength to the third fiber collimator; a second fiber collimator, configured to input an optical signal of a third wavelength; a second filter unit, configured to transmit the optical signal of the third wavelength to the third fiber collimator; and the third fiber collimator, configured to output a second combined optical signal. The second combined optical signal is an optical signal obtained through combining the optical signal of the first wavelength, the optical signal of the second wavelength, and the optical signal of the third wavelength.

## Description

This application claims priority to Chinese Patent Application No. 202111664917.8, filed with the China National Intellectual Property Administration on December 31, 2021 and entitled "OPTICAL SIGNAL TRANSMISSION APPARATUS AND OPTICAL TRANSMISSION SYSTEM", which is incorporated herein by reference in its entirety.

### TECHNICAL FIELD

Embodiments of this application relate to the field of optical communication technologies, and more specifically, to an optical signal transmission apparatus and an optical transmission system.

### BACKGROUND

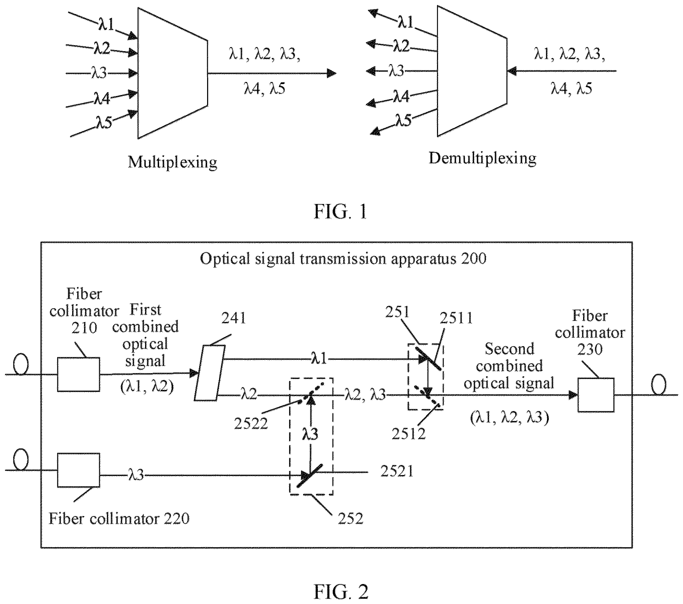

A multiplexer/demultiplexer is a key component in an optical communication system. As shown in FIG. 1, when the multiplexer/demultiplexer is configured to implement a multiplexing function, the multiplexer/demultiplexer couples a plurality of optical signals of different wavelengths received through a plurality of optical fibers into one channel of optical signals, and outputs the channel of optical signals through one optical fiber. When the multiplexer/demultiplexer is configured to implement a demultiplexing function, the multiplexer/demultiplexer splits, based on wavelengths, an optical signal received through one optical fiber, and outputs split optical signals through a plurality of optical fibers. However, when the multiplexer/demultiplexer shown in FIG. 1 is configured to implement the multiplexing function, if an optical signal input through at least one optical fiber in the plurality of optical fibers is an optical signal obtained through combining a plurality of optical signals of different wavelengths, the multiplexer/demultiplexer cannot multiplex the combined optical signal with an optical signal input through another optical fiber.

### SUMMARY

Embodiments of this application provide an optical signal transmission apparatus and an optical transmission system. Even if a plurality of optical signals received through a plurality of optical fibers include at least one combined optical signal, the plurality of optical signals may be multiplexed. Each of the at least one combined optical signal is an optical signal obtained through combining a plurality of optical signals of different wavelengths.

According to a first aspect, an optical signal transmission apparatus is provided, including a first fiber collimator, a second fiber collimator, a first beam splitter, a first filter unit, a second filter unit, and a third fiber collimator. The first fiber collimator is configured to input a first combined optical signal. The first combined optical signal is an optical signal obtained through combining an optical signal of a first wavelength and an optical signal of a second wavelength. The first beam splitter is configured to split the first combined optical signal from the first fiber collimator into the optical signal of the first wavelength and the optical signal of the second wavelength. The first beam splitter is further configured to transmit the optical signal of the first wavelength to the first filter unit, and the first filter unit is configured to transmit the optical signal of the first wavelength to the third fiber collimator. The first beam splitter is further configured to transmit the optical signal of the second wavelength to the third fiber collimator through the first filter unit and the second filter unit. The second fiber collimator is configured to input an optical signal of a third wavelength. The second filter unit is configured to transmit the optical signal of the third wavelength from the second fiber collimator to the third fiber collimator. The third fiber collimator is configured to output a second combined optical signal. The second combined optical signal is an optical signal obtained through combining the optical signal of the first wavelength, the optical signal of the second wavelength, and the optical signal of the third wavelength.

That the first fiber collimator is configured to input the first combined optical signal is equivalent to that the first fiber collimator sends the first combined optical signal to the first beam splitter described in the following embodiment. That the second fiber collimator is configured to input the optical signal of the third wavelength is equivalent to that the second fiber collimator sends the optical signal of the third wavelength to the second filter unit described in the following embodiment.

Based on the foregoing optical signal transmission apparatus, the optical signal transmission apparatus includes the first beam splitter corresponding to the first fiber collimator. When an optical signal input by the first fiber collimator is an optical signal obtained through combining the optical signal of the first wavelength and the optical signal of the second wavelength, the first beam splitter is configured to split the first combined optical signal input by the first fiber collimator into the optical signal of the first wavelength and the optical signal of the second wavelength. Therefore, the optical signal transmission apparatus can multiplex the optical signal of the first wavelength, the optical signal of the second wavelength, and the optical signal of the third wavelength that is input by the second fiber collimator.

With reference to the first aspect, in some implementations of the first aspect, the first beam splitter is an optical sheet device made of glass, silicon, or plastic.

Based on the foregoing technical solution, the first beam splitter is an optical sheet device made of glass, silicon, or plastic. The first beam splitter has a simple structure and a small volume, and therefore does not increase complexity of manufacturing the optical signal transmission apparatus.

With reference to the first aspect, in some implementations of the first aspect, the first filter unit includes a first reflector and/or a first filter

With reference to the first aspect, in some implementations of the first aspect, the second filter unit includes a second reflector and/or a second filter

With reference to the first aspect, in some implementations of the first aspect, the third fiber collimator is further configured to input a third combined optical signal. The third combined optical signal is an optical signal obtained through combining the optical signal of the first wavelength, the optical signal of the second wavelength, and the optical signal of the third wavelength. The first filter unit is further configured to: split the third combined optical signal from the third fiber collimator into the optical signal of the first wavelength and a fourth combined optical signal, and transmit the optical signal of the first wavelength to the first beam splitter. The fourth combined optical signal is an optical signal obtained through combining the optical signal of the second wavelength and the optical signal of the third wavelength. The first filter unit is further configured to transmit the fourth combined optical signal to the second filter unit. The second filter unit is further configured to: split the fourth combined optical signal to obtain the optical signal of the third wavelength, and transmit the optical signal of the third wavelength to the second fiber collimator. The second filter unit is further configured to transmit the optical signal of the second wavelength to the first beam splitter. The first beam splitter is configured to transmit a fifth combined optical signal to the first fiber collimator. The fifth combined optical signal is an optical signal obtained through combining the optical signal of the first wavelength and the optical signal of the second wavelength. The first fiber collimator is further configured to output the fifth combined optical signal. The second fiber collimator is further configured to output the optical signal of the third wavelength.

That the third fiber collimator is configured to input the third combined optical signal is equivalent to that the third fiber collimator sends the third combined optical signal to the first filter unit described in the following embodiment.

Based on the foregoing optical signal transmission apparatus, because the first beam splitter may obtain the fifth combined optical signal based on the optical signal of the first wavelength and the optical signal of the second wavelength, and transmit the fifth combined optical signal to the first fiber collimator for output, the optical signal transmission apparatus can output, through the first fiber collimator, a plurality of split optical signals of different wavelengths.

With reference to the first aspect, in some implementations of the first aspect, the optical signal transmission apparatus further includes a second beam splitter and a third filter unit. The third fiber collimator is further configured to input the third combined optical signal. The third combined optical signal is an optical signal obtained through combining the optical signal of the first wavelength, the optical signal of the second wavelength, the optical signal of the third wavelength, and an optical signal of a fourth wavelength. The first filter unit is further configured to: split the third combined optical signal from the third fiber collimator into the optical signal of the first wavelength and the fourth combined optical signal, and transmit the optical signal of the first wavelength to the first beam splitter. The fourth combined optical signal is an optical signal obtained through combining the optical signal of the second wavelength, the optical signal of the third wavelength, and the optical signal of the fourth wavelength. The first filter unit is further configured to transmit the fourth combined optical signal to the second filter unit. The second filter unit is further configured to: split the fourth combined optical signal to obtain the optical signal of the third wavelength and a sixth combined optical signal, and transmit the optical signal of the third wavelength to the second beam splitter. The sixth combined optical signal is an optical signal obtained through combining the optical signal of the second wavelength and the optical signal of the fourth wavelength. The second filter unit is further configured to transmit the sixth combined optical signal to the third filter unit. The third filter unit is configured to: split the sixth combined optical signal to obtain the optical signal of the fourth wavelength, and transmit the optical signal of the fourth wavelength to the second fiber collimator. The third filter unit is further configured to transmit the optical signal of the second wavelength to the first beam splitter. The first beam splitter is configured to transmit the fifth combined optical signal to the first fiber collimator. The fifth combined optical signal is an optical signal obtained through combining the optical signal of the first wavelength and the optical signal of the second wavelength. The first fiber collimator is further configured to output the fifth combined optical signal. The second beam splitter is configured to transmit a seventh combined optical signal to the second fiber collimator. The seventh combined optical signal is an optical signal obtained through combining the optical signal of the third wavelength and the optical signal of the fourth wavelength. The second fiber collimator is further configured to output the seventh combined optical signal.

Based on the foregoing optical signal transmission apparatus, because the second beam splitter may obtain the seventh combined optical signal based on the optical signal of the third wavelength and the optical signal of the fourth wavelength, and transmit the seventh combined optical signal to the second fiber collimator for output, the optical signal transmission apparatus can output, through the second fiber collimator, a plurality of split optical signals of different wavelengths.

With reference to the first aspect, in some implementations of the first aspect, the second beam splitter is an optical thin sheet made of glass, silicon, or plastic.

Based on the foregoing technical solution, the second beam splitter is an optical sheet device made of glass, silicon, or plastic. The second beam splitter has a simple structure and a small volume, and therefore does not increase complexity of manufacturing the optical signal transmission apparatus.

With reference to the first aspect, in some implementations of the first aspect, the second fiber collimator is configured to input an eighth combined optical signal. The eighth combined optical signal is an optical signal obtained through combining the optical signal of the third wavelength and the optical signal of the fourth wavelength. The optical signal transmission apparatus further includes the second beam splitter and the third filter unit. The second beam splitter is configured to split the eighth combined optical signal to obtain the optical signal of the third wavelength and the optical signal of the fourth wavelength. The second beam splitter is further configured to transmit the optical signal of the third wavelength to the second filter unit. The second beam splitter is further configured to transmit the optical signal of the fourth wavelength to the third filter unit. The third filter unit is further configured to transmit the optical signal of the fourth wavelength to the third fiber collimator. The third fiber collimator is configured to output the second combined optical signal. The second combined optical signal is an optical signal obtained through combining the optical signal of the first wavelength, the optical signal of the second wavelength, the optical signal of the third wavelength, and the optical signal of the fourth wavelength.

That the second fiber collimator is configured to input the eighth combined optical signal is equivalent to that the second fiber collimator sends the eighth combined optical signal to the second beam splitter described in the following embodiment.

Based on the foregoing optical signal transmission apparatus, the optical signal transmission apparatus includes the second beam splitter corresponding to the second fiber collimator. The second beam splitter is configured to split the eighth combined optical signal input by the second fiber collimator to obtain the optical signal of the third wavelength and the optical signal of the fourth wavelength. Therefore, the optical signal transmission apparatus can multiplex the optical signal of the first wavelength, the optical signal of the second wavelength, the optical signal of the third wavelength, and the optical signal of the fourth wavelength. With reference to the first aspect, in some implementations of the first aspect, the third filter unit includes a third reflector and/or a third filter.

With reference to the first aspect, in some implementations of the first aspect, a wavelength of the optical signal of the third wavelength is greater than a wavelength of the optical signal of the first wavelength, and the wavelength of the optical signal of the third wavelength is less than a wavelength of the optical signal of the second wavelength.

Based on the foregoing technical solution, when the wavelength of the optical signal of the third wavelength is greater than the wavelength of the optical signal of the first wavelength, and the wavelength of the optical signal of the third wavelength is greater than the wavelength of the optical signal of the second wavelength, because an existing optical device cannot reflect the optical signal of the third wavelength when transmitting the first combined optical signal, or cannot reflect the first combined optical signal when transmitting the optical signal of the third wavelength, if the first combined optical signal is not split into the optical signal of the first wavelength and the optical signal of the second wavelength, the first combined optical signal and a third optical signal cannot be multiplexed. Therefore, after the first beam splitter splits the first combined optical signal into the optical signal of the first wavelength and the optical signal of the second wavelength, the optical signal of the first wavelength, the optical signal of the second wavelength, and the optical signal of the third wavelength can be easily multiplexed.

With reference to the first aspect, in some implementations of the first aspect, the optical signals transmitted in the optical signal transmission apparatus are spatial light.

Based on the foregoing optical signal transmission apparatus, because the optical signal transmitted in the optical signal transmission apparatus is the spatial light instead of an optical signal transmitted through an optical fiber, optical fiber resources can be saved, and the optical signal transmission apparatus is easy to manufacture.

According to a second aspect, an optical transmission system is provided, including a first optical module, a second optical module, and an optical signal transmission apparatus. The optical signal transmission apparatus includes a first fiber collimator, a second fiber collimator, a first beam splitter, a first filter unit, a second filter unit, and a third fiber collimator. The first optical module is configured to send a first combined optical signal to the first fiber collimator. The first combined optical signal is an optical signal obtained through combining an optical signal of a first wavelength and an optical signal of a second wavelength. The first fiber collimator is configured to transmit the first combined optical signal to the first beam splitter. The first beam splitter is configured to split the first combined optical signal from the first fiber collimator into the optical signal of the first wavelength and the optical signal of the second wavelength. The first beam splitter is further configured to transmit the optical signal of the first wavelength to the first filter unit, and the first filter unit is configured to transmit the optical signal of the first wavelength to the third fiber collimator. The first beam splitter is further configured to transmit the optical signal of the second wavelength to the third fiber collimator through the first filter unit and the second filter unit. The second optical module is configured to send an optical signal of a third wavelength to the second fiber collimator. The second filter unit is configured to transmit the optical signal of the third wavelength from the second fiber collimator to the third fiber collimator. The third fiber collimator is configured to output a second combined optical signal. The second combined optical signal is an optical signal obtained through combining the optical signal of the first wavelength, the optical signal of the second wavelength, and the optical signal of the third wavelength.

Based on the foregoing optical transmission system, the optical signal transmission apparatus includes the first beam splitter. When an optical signal sent by the first optical module to the first fiber collimator is an optical signal obtained through combining the optical signal of the first wavelength and the optical signal of the second wavelength, the first beam splitter may split the first combined optical signal received from the first fiber collimator into the optical signal of the first wavelength and the optical signal of the second wavelength. Therefore, the optical signal transmission apparatus can multiplex the optical signal of the first wavelength, the optical signal of the second wavelength, and the optical signal of the third wavelength input by the second fiber collimator. Therefore, in the foregoing optical transmission system, the first optical module configured to send the first combined optical signal may be connected to the optical signal transmission apparatus through one optical fiber, thereby saving optical fiber resources and reducing installation difficulty.

With reference to the second aspect, in some implementations of the second aspect, the first beam splitter is an optical sheet device made of glass, silicon, or plastic.

Based on the foregoing technical solution, the first beam splitter is an optical sheet device made of glass, silicon, or plastic. The first beam splitter has a simple structure and a small volume, and therefore does not increase complexity of manufacturing the optical signal transmission apparatus.

With reference to the second aspect, in some implementations of the second aspect, the first filter unit includes a first reflector and/or a first filter

With reference to the second aspect, in some implementations of the second aspect, the second filter unit includes a second reflector and/or a second filter

With reference to the second aspect, in some implementations of the second aspect, the third fiber collimator is further configured to input a third combined optical signal. The third combined optical signal is an optical signal obtained through combining the optical signal of the first wavelength, the optical signal of the second wavelength, and the optical signal of the third wavelength. The first filter unit is further configured to: split the third combined optical signal from the third fiber collimator into the optical signal of the first wavelength and a fourth combined optical signal, and transmit the optical signal of the first wavelength to the first beam splitter. The fourth combined optical signal is an optical signal obtained through combining the optical signal of the second wavelength and the optical signal of the third wavelength. The first filter unit is further configured to transmit the fourth combined optical signal to the second filter unit. The second filter unit is further configured to: split the fourth combined optical signal to obtain the optical signal of the third wavelength, and transmit the optical signal of the third wavelength to the second fiber collimator. The second filter unit is further configured to transmit the optical signal of the second wavelength to the first beam splitter. The first beam splitter is configured to transmit a fifth combined optical signal to the first fiber collimator. The fifth combined optical signal is an optical signal obtained through combining the optical signal of the first wavelength and the optical signal of the second wavelength. The first optical module is further configured to receive the fifth combined optical signal from the first fiber collimator. The second optical module is further configured to receive the optical signal of the third wavelength from the second fiber collimator.

Based on the foregoing optical transmission system, because the first beam splitter included in the optical signal transmission apparatus may obtain the fifth combined optical signal based on the optical signal of the first wavelength and the optical signal of the second wavelength, and transmit the fifth combined optical signal to the first fiber collimator, the optical signal transmission apparatus can transmit, through the first fiber collimator, a plurality of split optical signals of different wavelengths. Therefore, in the foregoing optical transmission system, the first optical module configured to receive the fifth combined optical signal may be connected to the optical signal transmission apparatus through one optical fiber, thereby saving optical fiber resources and reducing installation difficulty.

With reference to the second aspect, in some implementations of the second aspect, the optical signal transmission apparatus further includes a second beam splitter and a third filter unit. The third fiber collimator is further configured to input the third combined optical signal. The third combined optical signal is an optical signal obtained through combining the optical signal of the first wavelength, the optical signal of the second wavelength, the optical signal of the third wavelength, and an optical signal of a fourth wavelength. The first filter unit is further configured to: split the third combined optical signal from the third fiber collimator into the optical signal of the first wavelength and the fourth combined optical signal, and transmit the optical signal of the first wavelength to the first beam splitter. The fourth combined optical signal is an optical signal obtained through combining the optical signal of the second wavelength, the optical signal of the third wavelength, and the optical signal of the fourth wavelength. The first filter unit is further configured to transmit the fourth combined optical signal to the second filter unit. The second filter unit is further configured to split the fourth combined optical signal to obtain the optical signal of the third wavelength and a sixth combined optical signal. The sixth combined optical signal is an optical signal obtained through combining the optical signal of the second wavelength and the optical signal of the fourth wavelength. The second filter unit is further configured to transmit the sixth combined optical signal to the third filter unit. The third filter unit is configured to: split the sixth combined optical signal to obtain the optical signal of the fourth wavelength, and transmit the optical signal of the fourth wavelength to the second fiber collimator. The third filter unit is further configured to transmit the optical signal of the second wavelength to the first beam splitter. The first beam splitter is configured to transmit the fifth combined optical signal to the first fiber collimator. The fifth combined optical signal is an optical signal obtained through combining the optical signal of the first wavelength and the optical signal of the second wavelength. The first optical module is further configured to receive the fifth combined optical signal from the first fiber collimator. The second beam splitter is configured to transmit a seventh combined optical signal to the second fiber collimator. The seventh combined optical signal is an optical signal obtained through combining the optical signal of the third wavelength and the optical signal of the fourth wavelength. The second optical module is further configured to receive the seventh combined optical signal from the second fiber collimator.

Based on the foregoing optical transmission system, because the second beam splitter included in the optical signal transmission apparatus may obtain the seventh combined optical signal based on the optical signal of the third wavelength and the optical signal of the fourth wavelength, and transmit the seventh combined optical signal to the second fiber collimator, the optical signal transmission apparatus can transmit, through the second fiber collimator, a plurality of split optical signals of different wavelengths. Therefore, in the foregoing optical transmission system, the second optical module configured to receive the seventh combined optical signal may be connected to the optical signal transmission apparatus through one optical fiber, thereby saving optical fiber resources and reducing installation difficulty.

With reference to the second aspect, in some implementations of the second aspect, the second beam splitter is an optical sheet device made of glass, silicon, or plastic.

Based on the foregoing technical solution, the second beam splitter is an optical sheet device made of glass, silicon, or plastic. The second beam splitter has a simple structure and a small volume, and therefore does not increase complexity of manufacturing the optical signal transmission apparatus.

With reference to the second aspect, in some implementations of the second aspect, the second optical module is configured to send an eighth combined optical signal to the second fiber collimator. The eighth combined optical signal is an optical signal obtained through combining the optical signal of the third wavelength and the optical signal of the fourth wavelength. The optical signal transmission apparatus further includes the second beam splitter and the third filter unit. The second fiber collimator is configured to transmit the eighth combined optical signal to the second beam splitter. The second beam splitter is configured to split the eighth combined optical signal to obtain the optical signal of the third wavelength and the optical signal of the fourth wavelength. The second beam splitter is further configured to transmit the optical signal of the third wavelength to the second filter unit. The second beam splitter is further configured to transmit the optical signal of the fourth wavelength to the third filter unit. The third filter unit is further configured to transmit the optical signal of the fourth wavelength to the third fiber collimator. The third fiber collimator is configured to output the second combined optical signal. The second combined optical signal is an optical signal obtained through combining the optical signal of the first wavelength, the optical signal of the second wavelength, the optical signal of the third wavelength, and the optical signal of the fourth wavelength.

Based on the foregoing optical transmission system, the optical signal transmission apparatus includes the second beam splitter. The second beam splitter may split the eighth combined optical signal received from the second fiber collimator into the optical signal of the third wavelength and the optical signal of the fourth wavelength. Therefore, the optical signal transmission apparatus can multiplex the optical signal of the first wavelength, the optical signal of the second wavelength, the optical signal of the third wavelength, and the optical signal of the fourth wavelength. Therefore, in the foregoing optical transmission system, the second optical module configured to send the eighth combined optical signal may be connected to the optical signal transmission apparatus through one optical fiber, thereby saving optical fiber resources and reducing installation difficulty.

With reference to the second aspect, in some implementations of the second aspect, the third filter unit includes a third reflector and/or a third filter

With reference to the second aspect, in some implementations of the second aspect, a wavelength of the optical signal of the third wavelength is greater than a wavelength of the optical signal of the first wavelength, and the wavelength of the optical signal of the third wavelength is less than a wavelength of the optical signal of the second wavelength.

Based on the foregoing technical solution, when the wavelength of the optical signal of the third wavelength is greater than the wavelength of the optical signal of the first wavelength, and the wavelength of the optical signal of the third wavelength is greater than the wavelength of the optical signal of the second wavelength, because an existing optical device cannot reflect the optical signal of the third wavelength when transmitting the first combined optical signal, or cannot reflect the first combined optical signal when transmitting the optical signal of the third wavelength, if the first combined optical signal is not split into the optical signal of the first wavelength and the optical signal of the second wavelength, the first combined optical signal and a third optical signal cannot be multiplexed. Therefore, after the first beam splitter splits the first combined optical signal into the optical signal of the first wavelength and the optical signal of the second wavelength, the optical signal of the first wavelength, the optical signal of the second wavelength, and the optical signal of the third wavelength can be easily multiplexed.

With reference to the second aspect, in some implementations of the second aspect, the optical signals transmitted in the optical signal transmission apparatus are spatial light.

Based on the foregoing optical transmission system, because the optical signal transmitted in the optical signal apparatus is the spatial light instead of an optical signal transmitted through an optical fiber, optical fiber resources can be saved, and the optical signal transmission apparatus is easy to manufacture.

### BRIEF DESCRIPTION OF DRAWINGS

FIG. 1 is a schematic diagram of multiplexing and demultiplexing performed by a multiplexer/demultiplexer;
FIG. 2 is a schematic diagram of a structure of an optical signal transmission apparatus according to an embodiment of this application;
FIG. 3 is a schematic diagram of a structure of an optical signal transmission apparatus according to an embodiment of this application;
FIG. 4 is a schematic diagram of a structure of an optical signal transmission apparatus according to an embodiment of this application;
FIG. 5 is a schematic diagram of a structure of an optical signal transmission apparatus according to an embodiment of this application;
FIG. 6 is a schematic diagram of a structure of an optical signal transmission apparatus according to an embodiment of this application;
FIG. 7 is a schematic diagram of a structure of an optical signal transmission apparatus according to an embodiment of this application;
FIG. 8 is a schematic diagram of a structure of an optical signal transmission apparatus according to an embodiment of this application; and
FIG. 9 is a schematic diagram of an optical transmission system according to an embodiment of this application.

### DESCRIPTION OF EMBODIMENTS

The following describes technical solutions in the embodiments of this application with reference to accompanying drawings.

In descriptions of this application, unless otherwise specified, "/" represents an "or" relationship between associated objects. For example, A/B may represent A or B. In this application, "and/or" is merely an association relationship for describing associated objects, and indicates that three relationships may exist. For example, A and/or B may represent: only A exists, both A and B exist, and only B exists, where A and B may be singular or plural. In addition, in the description of this application, unless otherwise stated, "a plurality of" means two or more than two.

In addition, for ease of clearly describing technical solutions in embodiments of this application, in the embodiments of this application, words such as "first" and "second" are used to distinguish same items or similar items. For example, both a first combined optical signal and a second combined optical signal in the following embodiments are optical signals obtained through combining a plurality of optical signals of different wavelengths. However, the first combined optical signal and the second combined optical signal are optical signals obtained through combining optical signals of different wavelengths. A person skilled in the art may understand that the terms such as "first" and "second" do not limit a quantity or an execution sequence, and the terms such as "first" and "second" do not indicate a definite difference.

In embodiments of this application, numbers such as "#1" and "#2" are further used to distinguish same items or similar items. For example, both a combined optical signal #1 and a combined optical signal #2 in the following embodiments include a plurality of optical signals of different wavelengths. However, the combined optical signal #1 and the combined optical signal #2 are optical signals in different transmission directions. A person skilled in the art may understand that words such as "#1" and "#2" do not limit a quantity and an execution sequence.

In addition, in embodiments of this application, terms such as "example" or "for example" are used to represent giving an example, an illustration, or a description. Any embodiment or design solution described as "example" or "for example" in embodiments of this application should not be interpreted as being more preferred or advantageous than another embodiment or design solution. Specifically, the use of the terms "example" or "for example" is intended to present the related concept in a concrete manner for ease of understanding.

A multiplexer/demultiplexer is a key component in an optical communication system. As shown in FIG. 1, when the multiplexer/demultiplexer is configured to implement a multiplexing function, the multiplexer/demultiplexer couples optical signals of five different wavelengths (that is, optical signals whose wavelengths are λ1, λ2, λ3, λ4, and λ5 respectively) received through five optical fibers into one channel of optical signals and outputs the channel of optical signals through one optical fiber. When the multiplexer/demultiplexer is configured to implement a demultiplexing function, the multiplexer/demultiplexer splits a combined optical signal (that is, an optical signal obtained through combining optical signals whose wavelengths are λ1, λ2, λ3, λ4, and λ5 respectively) received through one optical fiber based on wavelengths and outputs split optical signals through a plurality of optical fibers. However, when the multiplexer/demultiplexer shown in FIG. 1 is configured to implement the multiplexing function, if an optical signal input through at least one optical fiber in the plurality of optical fibers is a combined optical signal including a plurality of different wavelengths, the multiplexer/demultiplexer cannot multiplex the combined optical signal with an optical signal input through another optical fiber. For example, if the multiplexer/demultiplexer receives two optical signals through two optical fibers, one optical signal (which is denoted as an optical signal #1) is an optical signal obtained through combining the optical signal with a wavelength of λ1 and the optical signal with a wavelength of λ2, and another optical signal (which is denoted as an optical signal #2) is the optical signal with a wavelength of 3. In addition, a magnitude relationship between λ1, λ2, and λ3 is: λ1<λ3<λ2, or λ1>λ3>λ2. Because it is difficult for an existing optical device to reflect the optical signal #2 when transmitting the optical signal #1, or it is difficult to transmit the optical signal #2 when reflecting the optical signal #1, the multiplexer/demultiplexer cannot couple the optical signal #1 and the optical signal #2 into one channel of optical signals. When the multiplexer/demultiplexer shown in FIG. 1 is configured to implement the demultiplexing function, the multiplexer/demultiplexer cannot output a plurality of split optical signals of different wavelengths through one optical fiber.

In view of this, embodiments of this application provide an optical signal transmission apparatus. Even if a plurality of optical signals received by the optical signal transmission apparatus include at least one combined optical signal, the optical signal transmission apparatus may multiplex the plurality of optical signals, and/or output a plurality of split optical signals of different wavelengths through one optical fiber.

FIG. 2 shows a schematic diagram of a structure of an optical signal transmission apparatus according to an embodiment of this application. The optical signal transmission apparatus provided in this embodiment of this application includes a first fiber collimator. The first fiber collimator inputs a first combined optical signal, and sends the first combined optical signal to a first beam splitter. The first combined optical signal is an optical signal obtained through combining an optical signal of a first wavelength and an optical signal of a second wavelength. The first wavelength is different from the second wavelength. For example, a fiber collimator 210 (which is an example of the first fiber collimator) included in the optical signal transmission apparatus 200 shown in FIG. 2 is configured to send the first combined optical signal to a beam splitter 241 (which is an example of the first beam splitter). The first combined optical signal is an optical signal obtained through combining an optical signal with a wavelength of λ1 (which is an example of the optical signal of the first wavelength) and an optical signal with a wavelength of 2 (which is an example of the optical signal of the second wavelength). λ1 is not equal to λ2.

Optionally, the first fiber collimator may further send the optical signal of the first wavelength or the optical signal of the second wavelength to the first beam splitter.

Optionally, the first fiber collimator may further send, to the first beam splitter, an optical signal obtained through combining optical signals of more than two different wavelengths. For example, the first combined optical signal sent by the first fiber collimator to the first beam splitter is an optical signal obtained through combining the optical signal of the first wavelength, the optical signal of the second wavelength, and an optical signal of a fifth wavelength. The fifth wavelength is different from the first wavelength and the second wavelength.

The optical signal transmission apparatus provided in this embodiment of this application further includes a second fiber collimator. The second fiber collimator inputs an optical signal of a third wavelength, and sends the optical signal of the third wavelength to a second filter unit. For example, a fiber collimator 220 (which is an example of the second fiber collimator) included in the optical signal transmission apparatus shown in FIG. 2 is configured to send an optical signal with a wavelength of λ3 (which is an example of the optical signal of the third wavelength) to a filter unit 252 (which is an example of the second filter unit).

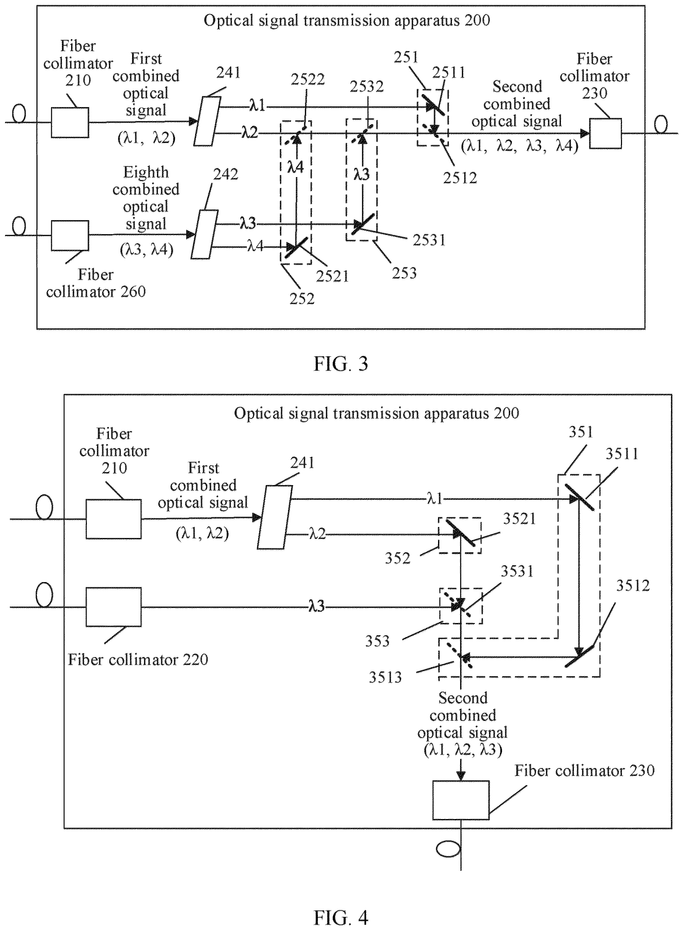

Optionally, the second fiber collimator inputs an eighth combined optical signal, and sends the eighth combined optical signal to a second beam splitter. The eighth combined optical signal is an optical signal obtained through combining the optical signal of the third wavelength and an optical signal of a fourth wavelength. The third wavelength is different from the fourth wavelength. For example, a fiber collimator 260 (which is another example of the second fiber collimator) included in an optical signal transmission apparatus 200 shown in FIG. 3 is configured to send an eighth combined optical signal to a beam splitter 242 (which is an example of the second beam splitter). The eighth combined optical signal is an optical signal obtained through combining an optical signal with a wavelength of λ3 and an optical signal with a wavelength of λ4 (which is an example of the optical signal of the fourth wavelength). λ3 is not equal to λ4.

Optionally, the second fiber collimator may further send the optical signal of the fourth wavelength to the second beam splitter.

Optionally, the second fiber collimator may further send, to the second beam splitter, an optical signal obtained through combining optical signals of more than two different wavelengths.

It should also be noted that the optical signals included in the combined optical signal input by the first fiber collimator and the optical signals included in the combined optical signal input by the second fiber collimator have different wavelengths. That is, the first wavelength and the second wavelength are different from the third wavelength. If the second fiber collimator inputs the eighth combined optical signal, the first wavelength and the second wavelength are different from the fourth wavelength.

Optionally, the wavelengths of the optical signals transmitted by the first fiber collimator and the second fiber collimator have the following relationship: the third wavelength is greater than the first wavelength, and the third wavelength is less than the second wavelength.

Optionally, the wavelengths of the optical signals transmitted by the first fiber collimator and the second fiber collimator have the following relationship: the third wavelength is greater than the second wavelength, and the third wavelength is less than the first wavelength.

It should be noted that a magnitude relationship between the fourth wavelength and the wavelength of the optical signal transmitted by the first fiber collimator is not limited in embodiments of this application. For example, the fourth wavelength may be greater than the first wavelength, or may be less than the first wavelength.

The optical signal transmission apparatus provided in this embodiment of this application further includes the first beam splitter, a first filter unit, the second filter unit, and a third fiber collimator.

The first beam splitter is an optical sheet device, which may be made of glass, silicon, or plastic. The first beam splitter corresponds to the first fiber collimator. The first beam splitter receives the first combined optical signal from the first fiber collimator, and is further configured to split the first combined optical signal to obtain the optical signal of the first wavelength and the optical signal of the second wavelength. The first beam splitter splits the first combined optical signal to obtain the optical signal of the first wavelength and the optical signal of the second wavelength, which means that the first beam splitter splits the first combined optical signal into two channels of optical signals. One optical signal is the optical signal of the first wavelength. Another optical signal is the optical signal of the second wavelength. In other words, the first beam splitter is configured to separate the optical signal of the first wavelength and the optical signal of the second wavelength from the first combined optical signal. If the first combined optical signal is an optical signal obtained through combining the optical signal of the first wavelength, the optical signal of the second wavelength, and the optical signal of the fifth wavelength, the first beam splitter is configured to split the first combined optical signal to obtain the optical signal of the first wavelength, the optical signal of the second wavelength, and the optical signal of the fifth wavelength.

Further, the first beam splitter is further configured to transmit the optical signal of the first wavelength to the first filter unit, and the first beam splitter is further configured to transmit the optical signal of the second wavelength to the second filter unit. After receiving the optical signal of the first wavelength from the first beam splitter, the first filter unit is configured to transmit the optical signal of the first wavelength to the third fiber collimator. After receiving the optical signal of the second wavelength from the first beam splitter, the second filter unit transmits the optical signal of the second wavelength to the first filter unit, and then the first filter unit transmits the optical signal of the second wavelength to the third fiber collimator.

For example, in the optical signal transmission apparatus 200 shown in FIG. 2, after receiving the first combined optical signal from the fiber collimator 210, a beam splitter 241 splits the first combined optical signal to obtain the optical signal with the wavelength of λ1 and the optical signal with the wavelength of λ2. Then, the beam splitter 241 transmits the optical signal with the wavelength of λ1 to a filter unit 251 (which is an example of the first filter unit), and transmits the optical signal with the wavelength of λ2 to the filter unit 252 (which is the example of the second filter unit). After receiving the optical signal with the wavelength of λ1 from the beam splitter 241, the filter unit 251 transmits the optical signal with the wavelength of λ1 to a fiber collimator 230 (which is an example of the third fiber collimator). After receiving the optical signal with the wavelength of λ2 from the beam splitter 241, the filter unit 252 transmits the optical signal with the wavelength of λ2 to the filter unit 251, and the filter unit 251 transmits the optical signal with the wavelength of λ2 to the fiber collimator 230.

The first filter unit corresponds to the optical signal of the first wavelength. In other words, the first filter unit may split out the optical signal of the first wavelength and/or reflect the optical signal of the first wavelength. If the first filter unit receives an optical signal of another wavelength, the first filter unit transmits the optical signal of the another wavelength.

The second filter unit corresponds to the optical signal of the third wavelength. In other words, the second filter unit may split out the optical signal of the third wavelength and/or reflect the optical signal of the third wavelength. If the second filter unit receives an optical signal of another wavelength, the second filter unit transmits the optical signal of the another wavelength. After receiving the optical signal of the third wavelength, the second filter unit is configured to transmit the optical signal of the third wavelength to the first filter unit, and the first filter unit is further configured to transmit the optical signal of the third wavelength to the third fiber collimator. For example, after receiving the optical signal with the wavelength of 3, the filter unit 252 shown in FIG. 2 is configured to transmit the optical signal with the wavelength of λ3 to the filter unit 251, and then the filter unit 251 transmits the optical signal with the wavelength of λ3 to the fiber collimator 230.

Optionally, if the optical signal transmission apparatus includes a fourth filter unit, the first beam splitter is configured to transmit the optical signal of the second wavelength to the fourth filter unit. Further, the fourth filter unit is configured to transmit the optical signal of the second wavelength to the third fiber collimator. For example, a filter unit 352 included in an optical signal transmission apparatus 200 shown in FIG. 4 is an example of the fourth filter unit. After splitting a first combined optical signal to obtain an optical signal with a wavelength of λ2, a beam splitter 241 transmits the optical signal with the wavelength of λ2 to the filter unit 352. After receiving the optical signal with the wavelength of λ2 from the beam splitter 241, the filter unit 352 is configured to transmit the optical signal with the wavelength of λ2 to a fiber collimator 230.

A specific structure of the filter unit is not limited in embodiments of this application.

For example, the first filter unit may include a first reflector and/or a first filter. The first reflector is configured to reflect the optical signal of the first wavelength, the first filter is configured to reflect the optical signal of the first wavelength, and the first filter is configured to transmit another optical signal. For example, the filter unit 251 shown in FIG. 2 includes a reflector 2511 (which is an example of the first reflector) and a filter 2512 (which is an example of the first filter). The reflector 2511 is configured to transmit the optical signal with the wavelength of λ1 to the filter 2512. The filter 2512 is configured to transmit the optical signal with the wavelength of λ1 to the fiber collimator 230. For another example, a filter unit 351 (which is another example of the first filter unit) shown in FIG. 4 includes a reflector 3511 (which is another example of the first reflector), a reflector 3512 (which is another example of the first reflector), and a filter 3513 (which is another example of the first filter). The reflector 3511 is configured to transmit an optical signal with a wavelength of λ1 to the reflector 3512, and then the reflector 3512 transmits the optical signal with the wavelength of λ1 to the filter 3513. The filter 3513 then transmits the optical signal with the wavelength of λ1 to the fiber collimator 230.

For example, the second filter unit may include a second reflector and/or a second filter. The second reflector is configured to reflect the optical signal of the third wavelength, the second filter is configured to reflect the optical signal of the third wavelength, and the second filter is configured to transmit another optical signal. For example, the filter unit 252 shown in FIG. 2 includes a reflector 2521 (which is an example of the second reflector) and a filter 2522 (which is an example of the second filter). The reflector 2521 is configured to transmit the optical signal with the wavelength of λ3 to the filter 2522. The filter 2522 is configured to transmit the optical signal of λ3 to the filter unit 251. For another example, a filter unit 353 (which is another example of the second filter unit) shown in FIG. 4 includes a filter 3531 (which is another example of the second filter). The filter 3531 is configured to transmit an optical signal with a wavelength of λ3 to the filter unit 351.

Optionally, if the second fiber collimator is configured to input the eighth combined optical signal, the optical signal transmission apparatus provided in this embodiment of this application further includes the second beam splitter and a third filter unit.

The second beam splitter is an optical sheet device, which may be made of glass, silicon or plastic. The second beam splitter corresponds to the second fiber collimator. The second beam splitter is configured to receive the eighth combined optical signal from the second fiber collimator, and the second beam splitter is further configured to split the eighth combined optical signal to obtain the optical signal of the third wavelength and the optical signal of the fourth wavelength. The second beam splitter splits the eighth combined optical signal to obtain the optical signal of the third wavelength and the optical signal of the fourth wavelength, which means that the second beam splitter splits the eighth combined optical signal into two channels of optical signals. One optical signal is the optical signal of the third wavelength. Another optical signal is the optical signal of the fourth wavelength. In other words, the second beam splitter is configured to separate the optical signal of the third wavelength and the optical signal of the fourth wavelength from the eighth combined optical signal.

Further, the second beam splitter is further configured to transmit the optical signal of the third wavelength to the second filter unit, and the second beam splitter is further configured to transmit the optical signal of the fourth wavelength to the third filter unit. The third filter unit corresponds to the optical signal of the fourth wavelength. In other words, the third filter unit may split out the optical signal of the fourth wavelength and/or reflect the optical signal of the fourth wavelength. If the third filter unit receives an optical signal of another wavelength, the third filter unit transmits the optical signal of the another wavelength.

For example, after receiving the eighth combined optical signal from the fiber collimator 260, the beam splitter 242 included in the optical signal transmission apparatus 200 shown in FIG. 3 splits the eighth combined optical signal to obtain the optical signal with the wavelength of λ3 and the optical signal with the wavelength of λ4. Then, the beam splitter 242 transmits the optical signal with the wavelength of λ3 to a filter unit 252, and transmits the optical signal with the wavelength of λ4 to a filter unit 253. Further, the filter unit 252 is configured to transmit the optical signal with the wavelength of λ3 to a filter unit 251, and then the filter unit 251 transmits the optical signal with the wavelength of λ3 to a fiber collimator 230. The filter unit 253 is configured to transmit the optical signal with the wavelength of λ4 to the filter unit 252, then the filter unit 252 transmits the optical signal with the wavelength of λ4 to the filter unit 251, and then the filter unit 251 transmits the optical signal with the wavelength of λ4 to the fiber collimator 230.

For example, the third filter unit may include a third reflector and/or a third filter. The third reflector is configured to reflect the optical signal of the fourth wavelength, the third filter is configured to reflect the optical signal of the fourth wavelength, and the third filter is configured to transmit another optical signal. For example, the filter unit 253 shown in FIG. 3 includes a reflector 2531 (which is an example of the third reflector) and a filter 2532 (which is an example of the third filter). The reflector 2531 is configured to transmit the optical signal with the wavelength of λ4 to the filter 2532. The filter 2532 is configured to transmit the optical signal of λ4 to the filter unit 252.

As described above, the optical signal transmission apparatus provided in this embodiment of this application further includes the third fiber collimator. The third fiber collimator is configured to output a second combined optical signal. The second combined optical signal is an optical signal obtained through combining the optical signal of the first wavelength, the optical signal of the second wavelength, and the optical signal of the third wavelength. For example, the fiber collimator 230 shown in FIG. 2 is configured to output a second combined optical signal. The second combined optical signal is an optical signal obtained through combining the optical signal with the wavelength of λ1, the optical signal with the wavelength of λ2, and the optical signal with the wavelength of λ3.

For example, the optical signal of the first wavelength, the optical signal of the second wavelength, and the optical signal of the third wavelength are coupled into the second combined optical signal before reaching the third fiber collimator. As shown in FIG. 2, the optical signal with the wavelength of λ1, the optical signal with the wavelength of λ2, and the optical signal with the wavelength of λ3 are coupled into the second combined optical signal before reaching the fiber collimator 230. For example, the filter 2512 and the filter 2522 are disposed on a transmission path of the optical signal with the wavelength of λ2. After passing through the filter 2522, the optical signal with the wavelength of λ2 is first coupled with the optical signal with the wavelength of λ3 transmitted by the filter 2522 to the fiber collimator 230 into one channel of light. Further, after the optical signal with the wavelength of λ2 and the optical signal with the wavelength of λ3 are coupled into one channel of light to pass through the filter 2512, the channel of light is coupled with the optical signal with the wavelength of λ1 transmitted by the filter 2512 to the fiber collimator 230 into the second combined optical signal.

Optionally, if the second fiber collimator is configured to input the eighth combined optical signal, the second combined optical signal is an optical signal obtained through combining the optical signal of the first wavelength, the optical signal of the second wavelength, the optical signal of the third wavelength, and the optical signal of the fourth wavelength.

The optical signals transmitted in the optical signal transmission apparatus are spatial light. The optical signals transmitted in the optical signal transmission apparatus are optical signals transmitted between devices included in the optical signal transmission apparatus. For example, the first combined optical signal transmitted by the first fiber collimator to the first beam splitter is spatial light, the optical signal of the first wavelength transmitted by the first beam splitter to the first filter unit is also spatial light, and the optical signal of the second wavelength transmitted by the first beam splitter to the third fiber collimator is also spatial light. The spatial light is an optical signal propagated by using air as a medium.

It should be noted that the optical signals transmitted by the first fiber collimator, the second fiber collimator, and the third fiber collimator are all collimated light.

The optical signal transmission apparatus provided in this embodiment of this application includes the first beam splitter corresponding to the first fiber collimator. The first beam splitter is configured to split the first combined optical signal received from the first fiber collimator into the optical signal of the first wavelength and the optical signal of the second wavelength. Therefore, the optical signal transmission apparatus can multiplex the optical signal of the first wavelength, the optical signal of the second wavelength, and the optical signal of the third wavelength received from the second fiber collimator. In a case in which the wavelength of the optical signal of the third wavelength is greater than the wavelength of the optical signal of the first wavelength, and the wavelength of the optical signal of the third wavelength is greater than the wavelength of the optical signal of the second wavelength, because an existing optical device cannot reflect the optical signal of the third wavelength when transmitting the first combined optical signal, or cannot reflect the first combined optical signal when transmitting the optical signal of the third wavelength, if the first combined optical signal is not split into the optical signal of the first wavelength and the optical signal of the second wavelength, the first combined optical signal and the third optical signal cannot be multiplexed. Therefore, after the first beam splitter splits the first combined optical signal into the optical signal of the first wavelength and the optical signal of the second wavelength, the optical signal of the first wavelength, the optical signal of the second wavelength, and the optical signal of the third wavelength can be easily multiplexed.

In addition, the first beam splitter is an optical sheet device made of glass, silicon, or plastic. The first beam splitter has a simple structure and a small volume. In addition, optical signals are transmitted between devices included in the optical signal transmission apparatus through space instead of through an optical fiber. Therefore, optical fiber resources can be saved, and the optical signal transmission apparatus is easy to manufacture.

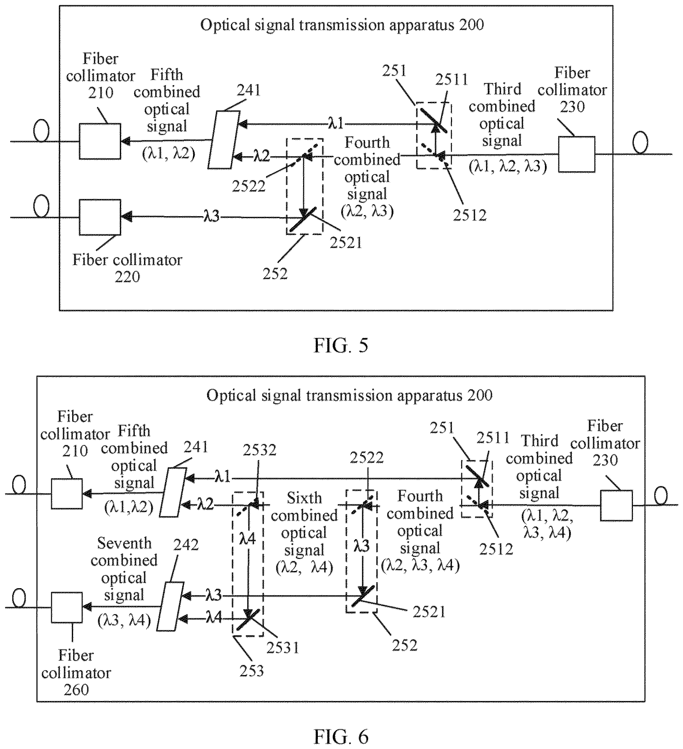

Optionally, the optical signal transmission apparatus provided in this embodiment of this application may further implement a demultiplexing function. With reference to FIG. 5 and FIG. 6, the following describes how an optical signal transmission apparatus provided in embodiments of this application implements a demultiplexing function. It should be understood that an optical signal transmission apparatus 200 shown in FIG. 5 has a same structure as the optical signal transmission apparatus 200 shown in FIG. 2. However, FIG. 5 shows different functions of the optical signal transmission apparatus 200. In addition, an optical signal transmission apparatus 200 shown in FIG. 6 has a same structure as the optical signal transmission apparatus 200 shown in FIG. 3. However, FIG. 6 shows different functions of the optical signal transmission apparatus 200.

The third fiber collimator included in the optical signal transmission apparatus further inputs a third combined optical signal, and sends the third combined optical signal to the first filter unit. The third combined optical signal is an optical signal obtained through combining the optical signal of the first wavelength, the optical signal of the second wavelength, and the optical signal of the third wavelength. For example, as shown in FIG. 5, a fiber collimator 230 is further configured to send a third combined optical signal to a filter unit 251. The third combined optical signal is an optical signal obtained through combining an optical signal with a wavelength of λ1, an optical signal with a wavelength of λ2, and an optical signal with a wavelength of λ3.

Optionally, the third fiber collimator may also input the optical signal of the first wavelength, the optical signal of the second wavelength, or the optical signal of the third wavelength.

The first filter unit is further configured to receive the third combined optical signal from the third fiber collimator, and is configured to split the third combined optical signal to obtain the optical signal of the first wavelength and a fourth combined optical signal. The fourth combined optical signal is an optical signal obtained through combining the optical signal of the second wavelength and the optical signal of the third wavelength. The first filter unit is configured to split the third combined optical signal to obtain the optical signal of the first wavelength and the fourth combined optical signal, which means that the first filter unit is configured to split the third combined optical signal into two channels of optical signals. One optical signal is the optical signal of the first wavelength. Another optical signal is the fourth combined optical signal. Alternatively, the first filter unit is configured to select the optical signal of the first wavelength from the third combined optical signal.

The first filter unit is further configured to transmit the optical signal of the first wavelength to the first beam splitter, and is further configured to transmit the fourth combined optical signal to the second filter unit. As shown in FIG. 5, after receiving the third combined optical signal from the fiber collimator 230, the filter unit 251 splits the third combined optical signal to obtain the optical signal with the wavelength of λ1 and a fourth combined optical signal. The fourth combined optical signal is an optical signal obtained through combining the optical signal with the wavelength of λ2 and the optical signal with the wavelength of λ3. The filter unit 251 is further configured to transmit the optical signal with the wavelength of λ1 to a beam splitter 241, and transmit the fourth combined optical signal to a filter unit 252.

For example, as shown in FIG. 5, the filter unit 251 may include a reflector 2511 and a filter 2512. The filter 2512 is configured to split the third combined optical signal to obtain the optical signal with the wavelength of λ1, and transmit the optical signal with the wavelength of λ1 to the reflector 2511. The reflector 2511 is configured to transmit the optical signal with the wavelength of λ1 to the beam splitter 241. The fourth combined optical signal passes through the filter 2512 and reaches the filter unit 252.

The second filter unit is further configured to split the fourth combined optical signal to obtain the optical signal of the third wavelength, and transmit the optical signal of the third wavelength to the second fiber collimator. The second filter unit is further configured to transmit the optical signal of the second wavelength to the first beam splitter. As shown in FIG. 5, after receiving the fourth combined optical signal from the filter unit 251, the filter unit 252 splits the fourth combined optical signal to obtain the optical signal with the wavelength of λ3, and transmits the optical signal with the wavelength of λ3 to the fiber collimator 220, and further transmits the optical signal with the wavelength of λ2 to the beam splitter 241. The second filter unit is configured to split the fourth combined optical signal to obtain the optical signal of the second wavelength and an optical signal of the third wavelength, which means that the second filter unit is configured to split the fourth combined optical signal into two channels of optical signals. One optical signal is the optical signal of the second wavelength. Another optical signal is the optical signal of the third wavelength. Alternatively, the second filter unit is configured to select the optical signal of the third wavelength from the fourth combined optical signal.

For example, as shown in FIG. 5, the filter 2522 included in the filter unit 252 is configured to split the fourth combined optical signal to obtain the optical signal with the wavelength of λ3, and transmit the optical signal with the wavelength of λ3 to the reflector 2521. The reflector 2521 included in the filter unit 252 is configured to transmit the optical signal with the wavelength of 3 to the fiber collimator 220. The optical signal with the wavelength of λ3 passes through the filter 2522 and reaches the beam splitter 241.

The first beam splitter is configured to receive the optical signal of the first wavelength from the first filter unit, and is configured to receive the optical signal of the second wavelength from the second filter unit or the third filter unit. Further, the first beam splitter is further configured to transmit a fifth combined optical signal to the first fiber collimator. The fifth combined optical signal is an optical signal obtained through combining the optical signal of the first wavelength and the optical signal of the second wavelength. That is, after receiving the optical signal of the first wavelength and the optical signal of the second wavelength, the first beam splitter couples the optical signal of the first wavelength and the optical signal of the second wavelength into the fifth combined optical signal, and transmits the fifth combined optical signal to the first fiber collimator. As shown in FIG. 5, the beam splitter 241 is further configured to receive the optical signal with the wavelength of λ1 and the optical signal with the wavelength of λ2, and transmits the fifth combined optical signal coupled by the optical signal with the wavelength of λ1 and the optical signal with the wavelength of λ2 to a fiber collimator 210.

The first fiber collimator is further configured to output the fifth combined optical signal. The second fiber collimator is further configured to output the optical signal of the third wavelength. As shown in FIG. 5, the fiber collimator 210 is further configured to output the fifth combined optical signal received from the beam splitter 241, and the fiber collimator 220 is further configured to output the optical signal with the wavelength of λ3.

Optionally, if the third combined optical signal is an optical signal obtained through combining the optical signal of the first wavelength, the optical signal of the second wavelength, the optical signal of the third wavelength, and the optical signal of the fourth wavelength, the fourth combined optical signal obtained through splitting the third combined optical signal by the first filter unit is an optical signal obtained through combining the optical signal of the second wavelength and the optical signal of the third wavelength. Further, the second filter unit splits the fourth combined optical signal from the first filter unit into a sixth combined optical signal and the optical signal of the third wavelength. The sixth combined optical signal is an optical signal obtained through combining the optical signal of the second wavelength and the optical signal of the fourth wavelength. The second filter unit is further configured to transmit the optical signal of the third wavelength to the second beam splitter, and transmit the sixth combined optical signal to the third filter unit. Further, after receiving the sixth combined optical signal from the second filter unit, the third filter unit splits the sixth combined optical signal to obtain the optical signal of the fourth wavelength, and transmits the optical signal of the fourth wavelength to the second beam splitter. The third filter unit is further configured to transmit the optical signal of the second wavelength to the first beam splitter. The second beam splitter is configured to receive the optical signal of the third wavelength from the second filter unit, and is configured to receive the optical signal of the fourth wavelength from the third filter unit. Further, the second beam splitter is further configured to transmit a seventh combined optical signal to the second fiber collimator. The seventh combined optical signal is an optical signal obtained through combining the optical signal of the third wavelength and the optical signal of the fourth wavelength.

As shown in FIG. 6, a third combined optical signal input by a fiber collimator 230 is an optical signal obtained through combining an optical signal with a wavelength of λ1, an optical signal with a wavelength of 2, an optical signal with a wavelength of λ3, and an optical signal with a wavelength of λ4. Further, a fourth combined optical signal obtained through splitting the third combined optical signal by a filter unit 251 is an optical signal obtained through combining the optical signal with the wavelength of 2, the optical signal with the wavelength of 3, and the optical signal with the wavelength of λ4. Further, after receiving the fourth combined optical signal from the filter unit 251, a filter unit 252 splits the fourth combined optical signal to obtain the optical signal with the wavelength of λ3 and a sixth combined optical signal. The sixth combined optical signal is an optical signal obtained through combining the optical signal with the wavelength of λ2 and the optical signal with the wavelength of λ4. The filter unit 252 is further configured to transmit the optical signal with the wavelength of λ3 to a beam splitter 242, and transmit the sixth combined optical signal to a filter unit 253. After receiving the sixth combined optical signal from the filter unit 252, the filter unit 253 splits the sixth combined optical signal to obtain the optical signal with the wavelength of λ4, and transmits the optical signal with the wavelength of λ4 to the beam splitter 242, and further transmits the optical signal with the wavelength of λ2 to the beam splitter 241. After receiving the optical signal with the wavelength of λ3 and the optical signal with the wavelength of λ4, the beam splitter 242 couples the optical signal with the wavelength of λ3 and the optical signal with the wavelength of λ4 into a seventh combined optical signal, and transmits the seventh combined optical signal to a fiber collimator 220. The fiber collimator 220 is further configured to output the seventh combined optical signal received from the beam splitter 242.

The optical signal transmission apparatus provided in this embodiment of this application includes the first beam splitter. The first beam splitter may obtain the fifth combined optical signal based on the optical signal of the first wavelength and the optical signal of the second wavelength, and transmit the fifth combined optical signal to the first fiber collimator. Therefore, the optical signal transmission apparatus can output, through one optical fiber, a plurality of split optical signals of different wavelengths.

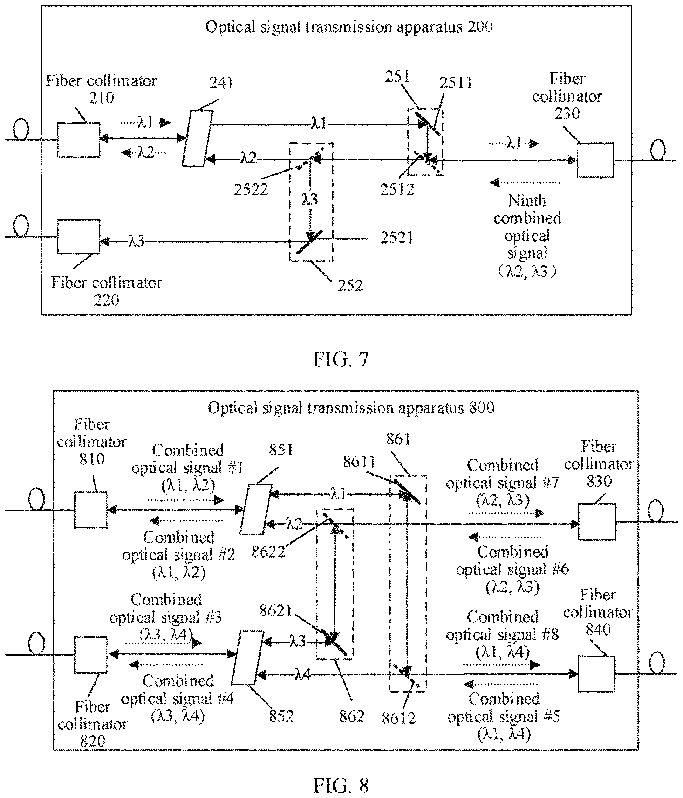

Optionally, the optical signal transmission apparatus may further implement to simultaneously input an optical signal and output an optical signal through a fiber collimator. With reference to FIG. 7, the following describes how an optical signal transmission apparatus provided in an embodiment of this application simultaneously inputs an optical signal and outputs an optical signal through a fiber collimator. It should be understood that an optical signal transmission apparatus 200 shown in FIG. 7 has a same structure as the optical signal transmission apparatus 200 shown in FIG. 2. However, FIG. 7 shows different functions of the optical signal transmission apparatus 200.

As shown in FIG. 7, a fiber collimator 210 included in the optical signal transmission apparatus 200 sends an optical signal with a wavelength of λ1 to a beam splitter 241, and is further configured to output an optical signal with a wavelength of λ2 received from the beam splitter 241.

The beam splitter 241 is configured to transmit the optical signal with the wavelength of λ1 to a filter unit 251, and is further configured to receive the optical signal with the wavelength of λ2 from a filter unit 252, and transmit the optical signal with the wavelength of λ2 to the fiber collimator 210.

The filter unit 251 is configured to receive the optical signal with the wavelength of λ1 from the beam splitter, and is further configured to transmit the optical signal with the wavelength of λ1 to a fiber collimator 230.

The filter unit 252 is configured to receive a ninth combined optical signal from the fiber collimator 230, and split the ninth combined optical signal to obtain an optical signal with a wavelength of 3. The ninth combined optical signal is an optical signal obtained through combining the optical signal with the wavelength of λ2 and the optical signal with the wavelength of λ3. The filter unit 252 is further configured to transmit the optical signal with the wavelength of λ3 to a fiber collimator 220, and further transmit the optical signal with the wavelength of λ2 to the beam splitter 241.

The fiber collimator 230 is configured to output the optical signal with the wavelength of λ1 received from the filter unit 251, and is further configured to input the ninth combined optical signal.

The optical signal transmission apparatus provided in this embodiment of this application includes the first beam splitter. The first beam splitter may transmit, to the first filter unit, the optical signal of the first wavelength received from the first fiber collimator, and may further transmit, to the fiber collimator, the optical signal of the second wavelength received from the second filter unit. Therefore, the optical signal transmission apparatus can simultaneously input an optical signal and output an optical signal through the first fiber collimator. Therefore, the optical signal transmission apparatus provided in this embodiment of this application may support direct connection to the single-fiber bidirectional optical module, and transmit a split optical signal to the single-fiber bidirectional optical module while receiving an optical signal from the single-fiber bidirectional optical module.

FIG. 8 shows an optical signal transmission apparatus according to another embodiment of this application. As shown in FIG. 8, an optical signal transmission apparatus 800 includes a fiber collimator 810, a fiber collimator 820, a beam splitter 851 corresponding to the fiber collimator 810, a beam splitter 852 corresponding to the fiber collimator 820, a filter unit 861, a filter unit 862, a fiber collimator 830, and a fiber collimator 840.

The fiber collimator 810 is configured to send a combined optical signal #1 to a beam splitter 815. The combined optical signal #1 is an optical signal obtained through combining an optical signal with a wavelength of λ1 and an optical signal with a wavelength of λ2. Alternatively, the fiber collimator 810 is further configured to output a combined optical signal #2. The combined optical signal #2 is the optical signal obtained through combining the optical signal with the wavelength of λ1 and the optical signal with the wavelength of λ2.

The fiber collimator 820 is configured to send a combined optical signal #3 to the beam splitter 852. The combined optical signal #3 is an optical signal obtained through combining an optical signal with a wavelength of λ3 and an optical signal with a wavelength of λ4. Alternatively, the fiber collimator 820 is further configured to output a combined optical signal #4. The combined optical signal #4 is the optical signal obtained through combining the optical signal with the wavelength of λ3 and the optical signal with the wavelength of λ4.

The beam splitter 851 is configured to split the combined optical signal #1 into the optical signal with the wavelength of λ1 and the optical signal with the wavelength of λ2. The beam splitter 851 is further configured to transmit the optical signal with the wavelength of λ1 to the filter unit 861, and is further configured to transmit the optical signal with the wavelength of λ2 to the fiber collimator 830. Alternatively, the beam splitter 851 is further configured to receive the optical signal with the wavelength of λ1 from the filter unit 861, and is configured to receive the optical signal with the wavelength of λ2 from the fiber collimator 840. The beam splitter 851 is further configured to obtain the combined optical signal #2 based on the optical signal with the wavelength of λ1 and the optical signal with the wavelength of λ2, and transmit the combined optical signal #2 to the fiber collimator 810.

The beam splitter 852 is configured to split the combined optical signal #3 into the optical signal with the wavelength of λ3 and the optical signal with the wavelength of λ4. The beam splitter 852 is further configured to transmit the optical signal with the wavelength of λ3 to the filter unit 862, and is further configured to transmit the optical signal with the wavelength of λ4 to the fiber collimator 840. Alternatively, the beam splitter 852 is configured to receive the optical signal with the wavelength of λ3 from the filter unit 862, and is configured to receive an optical signal with the wavelength of λ4 from the fiber collimator 840. The beam splitter 852 is further configured to obtain the combined optical signal #4 based on the optical signal with the wavelength of λ3 and the optical signal with the wavelength of λ4, and transmit the combined optical signal #4 to the fiber collimator 820.

A reflector 8611 included in the filter unit 861 is configured to receive the optical signal with the wavelength of λ1 from the beam splitter 851. A filter 8612 included in the filter unit 861 is configured to transmit the optical signal with the wavelength of λ1 to the fiber collimator 840. Alternatively, the filter 8612 included in the filter unit 861 is configured to receive a combined optical signal #5 from the fiber collimator 840. The combined optical signal #5 is an optical signal obtained through combining the optical signal with the wavelength of λ1 and the optical signal with the wavelength of λ4. The filter 8612 is further configured to split the optical signal with the wavelength λ1 from the combined optical signal #5, and transmit the optical signal with the wavelength λ1 to the beam splitter 851 through the reflector 8611.

The reflector 8621 included in the filter unit 862 is configured to receive the optical signal with a wavelength of λ3 from the beam splitter 852. The filter 8622 included in the filter unit 861 is configured to transmit the optical signal with the wavelength of λ3 to the fiber collimator 830. Alternatively, the filter 8622 included in the filter unit 862 is configured to receive a combined optical signal #6 from the fiber collimator 830. The combined optical signal #6 is an optical signal obtained through combining the optical signal with the wavelength of λ3 and the optical signal with the wavelength of λ2. The filter 8622 is further configured to split the optical signal with the wavelength λ3 from the combined optical signal #6, and transmit the optical signal with the wavelength λ3 to the beam splitter 852 through the reflector 8621.

The fiber collimator 830 is configured to output a combined optical signal #7. The combined optical signal #7 is an optical signal obtained through combining the optical signal with the wavelength of λ2 and the optical signal with the wavelength of λ3. Alternatively, the fiber collimator 830 is further configured to send the combined optical signal #6 to the filter unit 861.

The fiber collimator 840 is configured to output a combined optical signal #8. The combined optical signal #8 is an optical signal obtained through combining the optical signal with the wavelength of λ1 and the optical signal with the wavelength of λ4. Alternatively, the fiber collimator 840 is further configured to send the combined optical signal #5 to the filter unit 862.

It should be noted that FIG. 8 is described only by using an example in which the fiber collimator 830 is configured to transmit the optical signal with the wavelength of λ2 and the optical signal with the wavelength of 73, and the fiber collimator 840 is configured to transmit the optical signal with the wavelength of λ1 and the optical signal with the wavelength of λ4. The fiber collimator 830 and the fiber collimator 840 may separately transmit any one or more optical signals of four optical signals of different wavelengths, provided that the fiber collimator 830 and the fiber collimator 840 are configured to transmit optical signals of different wavelengths. For example, the fiber collimator 830 is configured to transmit the optical signal with the wavelength of 71, and the fiber collimator 840 is configured to transmit the optical signals of the remaining three wavelengths.

Embodiments of this application further provides an optical transmission system. The optical transmission system includes a first optical module, a second optical module, and an optical signal transmission apparatus. The first optical module is configured to send a first combined optical signal to a first fiber collimator, and/or the first optical module is configured to receive a fifth combined optical signal from the first fiber collimator. The second optical module is configured to send an optical signal of a third wavelength to a second fiber collimator, and/or the second optical module is configured to receive the optical signal of the third wavelength from the second fiber collimator.

Optionally, the second optical module is configured to send an eighth combined optical signal to the second fiber collimator, and/or the second optical module is configured to receive a seventh combined optical signal from the second fiber collimator.

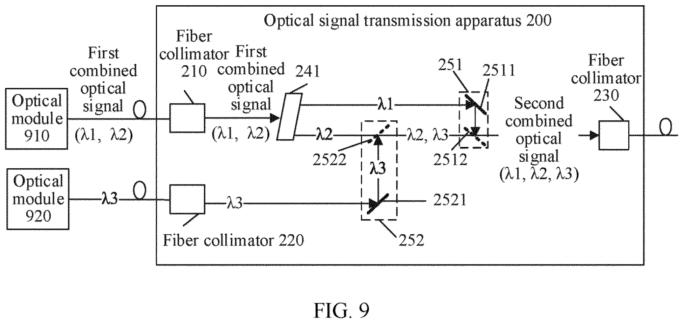

For example, an optical module 910 included in an optical transmission system shown in FIG. 9 is an example of the first optical module, and an optical module 920 is an example of the second optical module. The optical module 910 is configured to send a first combined optical signal to a fiber collimator 210. The first combined optical signal is an optical signal obtained through combining an optical signal with a wavelength of 71 and an optical signal with a wavelength of λ2. The optical module 920 is configured to send an optical signal with a wavelength of λ3 to a fiber collimator 220.

For descriptions of an optical signal transmission apparatus 200, refer to FIG. 2 to FIG. 7 above. For brevity, details are not described herein again.

In the optical transmission system provided in this embodiment of this application, the optical signal transmission apparatus includes the first beam splitter. The first beam splitter may split the first combined optical signal received from the first fiber collimator into the optical signal of the first wavelength and the optical signal of the second wavelength. Therefore, the optical signal transmission apparatus can multiplex the optical signal of the first wavelength, the optical signal of the second wavelength, and the optical signal of the third wavelength input by the second fiber collimator. Therefore, in the optical transmission system provided in this embodiment of this application, the optical module configured to send the first combined optical signal may be connected to the optical signal transmission apparatus through an optical fiber, thereby saving optical fiber resources and reducing installation difficulty.

Alternatively, the first beam splitter may further obtain the fifth combined optical signal based on the optical signal of the first wavelength and the optical signal of the second wavelength, and transmit the fifth combined optical signal to the first fiber collimator. Therefore, the optical signal transmission apparatus can output, through a single optical fiber, a plurality of split optical signals of different wavelengths. Therefore, in the optical transmission system provided in this embodiment of this application, the optical module configured to receive the fifth combined optical signal may be connected to the optical signal transmission apparatus through an optical fiber, thereby saving optical fiber resources and reducing installation difficulty.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection of this application should be subject to the protection scope of the claims.

## Claims

1. An optical signal transmission apparatus, comprising a first fiber collimator, a second fiber collimator, a first beam splitter, a first filter unit, a second filter unit, and a third fiber collimator, wherein
the first fiber collimator is configured to input a first combined optical signal, wherein the first combined optical signal is an optical signal obtained through combining an optical signal of a first wavelength and an optical signal of a second wavelength;
the first beam splitter is configured to split the first combined optical signal from the first fiber collimator into the optical signal of the first wavelength and the optical signal of the second wavelength;
the first beam splitter is further configured to transmit the optical signal of the first wavelength to the first filter unit, wherein the first filter unit is configured to transmit the optical signal of the first wavelength to the third fiber collimator;
the first beam splitter is further configured to transmit the optical signal of the second wavelength to the third fiber collimator through the first filter unit and the second filter unit;
the second fiber collimator is configured to input an optical signal of a third wavelength;
the second filter unit is configured to transmit the optical signal of the third wavelength from the second fiber collimator to the third fiber collimator; and
the third fiber collimator is configured to output a second combined optical signal, wherein the second combined optical signal is an optical signal obtained through combining the optical signal of the first wavelength, the optical signal of the second wavelength, and the optical signal of the third wavelength.

2. The optical signal transmission apparatus according to claim 1, wherein the third fiber collimator is further configured to input a third combined optical signal, and the third combined optical signal is an optical signal obtained through combining the optical signal of the first wavelength, the optical signal of the second wavelength, and the optical signal of the third wavelength;
the first filter unit is further configured to: split the third combined optical signal from the third fiber collimator into the optical signal of the first wavelength and a fourth combined optical signal, and transmit the optical signal of the first wavelength to the first beam splitter, wherein the fourth combined optical signal is an optical signal obtained through combining the optical signal of the second wavelength and the optical signal of the third wavelength;
the first filter unit is further configured to transmit the fourth combined optical signal to the second filter unit;
the second filter unit is further configured to: split the fourth combined optical signal to obtain the optical signal of the third wavelength, and transmit the optical signal of the third wavelength to the second fiber collimator;
the second filter unit is further configured to transmit the optical signal of the second wavelength to the first beam splitter;
the first beam splitter is configured to transmit a fifth combined optical signal to the first fiber collimator, wherein the fifth combined optical signal is an optical signal obtained through combining the optical signal of the first wavelength and the optical signal of the second wavelength;
the first fiber collimator is further configured to output the fifth combined optical signal; and
the second fiber collimator is further configured to output the optical signal of the third wavelength.

3. The optical signal transmission apparatus according to claim 1 or 2, wherein the first beam splitter is an optical sheet device made of glass, silicon, or plastic.

4. The optical signal transmission apparatus according to any one of claims 1 to 3, wherein a wavelength of the optical signal of the third wavelength is greater than a wavelength of the optical signal of the first wavelength, and the wavelength of the optical signal of the third wavelength is less than a wavelength of the optical signal of the second wavelength.

5. The optical signal transmission apparatus according to any one of claims 1 to 4, wherein the optical signals transmitted in the optical signal transmission apparatus are spatial light.

6. The optical signal transmission apparatus according to any one of claims 1 to 5, wherein the first filter unit comprises a first reflector and/or a first filter

7. The optical signal transmission apparatus according to any one of claims 1 to 6, wherein the second filter unit comprises a second reflector and/or a second filter

8. An optical transmission system, comprising a first optical module, a second optical module, and an optical signal transmission apparatus, wherein the optical signal transmission apparatus comprises a first fiber collimator, a second fiber collimator, a first beam splitter, a first filter unit, a second filter unit, and a third fiber collimator;
the first optical module is configured to send a first combined optical signal to the first fiber collimator, wherein the first combined optical signal is an optical signal obtained through combining an optical signal of a first wavelength and an optical signal of a second wavelength;
the first fiber collimator is configured to transmit the first combined optical signal to the first beam splitter;
the first beam splitter is configured to split the first combined optical signal from the first fiber collimator into the optical signal of the first wavelength and the optical signal of the second wavelength;
the first beam splitter is further configured to transmit the optical signal of the first wavelength to the first filter unit, wherein the first filter unit is configured to transmit the optical signal of the first wavelength to the third fiber collimator;
the first beam splitter is further configured to transmit the optical signal of the second wavelength to the third fiber collimator through the first filter unit and the second filter unit;
the second optical module is configured to send an optical signal of a third wavelength to the second fiber collimator;
the second filter unit is configured to transmit the optical signal of the third wavelength from the second fiber collimator to the third fiber collimator; and
the third fiber collimator is configured to output a second combined optical signal, wherein the second combined optical signal is an optical signal obtained through combining the optical signal of the first wavelength, the optical signal of the second wavelength, and the optical signal of the third wavelength.

9. The optical transmission system according to claim 8, wherein the third fiber collimator is further configured to input a third combined optical signal, wherein the third combined optical signal is an optical signal obtained through combining the optical signal of the first wavelength, the optical signal of the second wavelength, and the optical signal of the third wavelength;
the first filter unit is further configured to: split the third combined optical signal from the third fiber collimator into the optical signal of the first wavelength and a fourth combined optical signal, and transmit the optical signal of the first wavelength to the first beam splitter, wherein the fourth combined optical signal is an optical signal obtained through combining the optical signal of the second wavelength and the optical signal of the third wavelength;
the first filter unit is further configured to transmit the fourth combined optical signal to the second filter unit;
the second filter unit is further configured to: split the fourth combined optical signal to obtain the optical signal of the third wavelength, and transmit the optical signal of the third wavelength to the second fiber collimator;
the second filter unit is further configured to transmit the optical signal of the second wavelength to the first beam splitter;
the first beam splitter is configured to transmit a fifth combined optical signal to the first fiber collimator, wherein the fifth combined optical signal is an optical signal obtained through combining the optical signal of the first wavelength and the optical signal of the second wavelength;
the first optical module is further configured to receive the fifth combined optical signal from the first fiber collimator; and
the second optical module is further configured to receive the optical signal of the third wavelength from the second fiber collimator.

10. The optical transmission system according to claim 8 or 9, wherein the first beam splitter is an optical sheet device made of glass, silicon, or plastic.

11. The optical transmission system according to any one of claims 8 to 10, wherein a wavelength of the optical signal of the third wavelength is greater than a wavelength of the optical signal of the first wavelength, and the wavelength of the optical signal of the third wavelength is less than a wavelength of the optical signal of the second wavelength.

12. The optical transmission system according to any one of claims 8 to 11, wherein the optical signals transmitted in the optical signal transmission apparatus are spatial light.

13. The optical transmission system according to any one of claims 8 to 12, wherein the first filter unit comprises a first reflector and/or a first filter

14. The optical transmission system according to any one of claims 8 to 13, wherein the second filter unit comprises a second reflector and/or a second filter.
